# EUROPEAN PATENT SPECIFICATION

(11) **EP 2 381 523 B1**
(45) Date of publication and mention of the grant of the patent: **03.07.2013**
(21) Application number: 11160605.9
(22) Date of filing: 31.03.2011
(51) Int. Cl.: H01M 8/04, H01M 8/06, C01B 3/32, C01B 3/38

(54) **Reforming apparatus for fuel cell system**
Reformierungsvorrichtung für Brennstoffzellensystem
Appareil de reformage pour système de pile à combustible

(30) Priority: 23.04.2010 US 327596 P; 17.12.2010 US 971437
(43) Date of publication of application: 26.10.2011
(73) Proprietor: Samsung SDI Co., Ltd., Yongin-si, Gyeonggi-do (KR)
(72) Inventor: Kim, Dong-Rak, Gyeonggi-do (KR); Kim, Dong-Hyun, Gyeonggi-do (KR); Hong, Ming-Zi, Gyeonggi-do (KR); Cho, Woong-Ho, Gyeonggi-do (KR); Kim, Hyun, Gyeonggi-do (KR)
(74) Representative: Walaski, Jan Filip

(56) References cited:
- WO-A2-2009/109744
- US-A1- 2003 031 900
- US-A1- 2003 154 654
- US-A1- 2005 175 870
- US-B1- 6 641 625

## Description

The present invention relates to a reforming apparatus for a fuel cell system and a fuel cell system including the same.

A fuel cell system basically includes a fuel cell stack, a fuel supply unit, and an oxidizer supply unit. The fuel cell stack receives fuel (hydrocarbon-based fuel, pure hydrogen, or hydrogen-rich reformed gas) and an oxidizer (air or pure air) from the fuel supply unit and the oxidizer supply unit, respectively, and generates electrical energy using an electrochemical reaction of the fuel and the oxidizer.

For example, in a polymer electrolyte fuel cell, a fuel cell system further includes a reformer for generating hydrogen-rich reformed gas by reforming hydrocarbon-based fuel. The polymer electrolyte fuel cell is complicated because it has to further include the reformer and its incidental units, but is suitable for a stationary installation type, such as for home use, because it has a high energy density and a high output.

The types of the reformer include a steam reformer, a partial oxidization reformer, and an autothermal reaction reformer. From among them, the steam reformer has a high hydrogen concentration of reformed gas and an excellent long-time operation stability. The steam reformer includes a reforming unit in which a chemical catalyst reaction resulting from heat energy of hydrocarbon-based fuel and steam is performed and a combustion unit (burner) in which the reforming unit is heated at a temperature of 750°C or more in order to accelerate the chemical catalyst reaction of the reforming unit.

The reforming unit is connected to a fuel tank and is supplied with hydrocarbon-based fuel stored in the fuel tank when a fuel pump is operated. Further, the reforming unit is connected to a water tank and is supplied with water stored in the water tank when a water pump is operated. The combustion unit receives external air and the hydrocarbon-based fuel stored in the fuel pump and generates heat energy by combusting the fuel and the air.

In the above-described fuel cell system, when outside temperature goes down below zero, the water of the water tank is changed to ice. In this case, the fuel cell system cannot be used. To reuse the fuel cell system, you have to wait until the ice melts at above-zero temperature or to take a measure to melt the ice by, for example, installing hot wires in the water tank. However, a lot of time is taken to melt the ice at above-zero temperature. Further, in the case in which the hot wires are installed in the water tank, generating efficiency of the fuel cell system is lowered because additional power for driving the hot wires is required.

The present invention has been made in an effort to provide a fuel cell system having an advantage of stably operating the fuel cell system even at a sub-zero temperature by preventing the freezing of a water tank without lowering generating efficiency.

US2003/0154654 discloses a fuel cell system in which heat from a combustor is used via a heat exchanger to thaw frozen water in the water tank.

According to the invention, there is provided a reforming apparatus for a fuel cell system, comprising a reformer and a water tank for supplying water to the reformer, further comprising a reformed gas pipe extending from the reformer for discharging reformed gas and a combustion gas pipe extending from the reformer for discharging combustion gas, wherein the reformed gas pipe and the combustion gas pipe are in direct thermal contact with water in the water tank.

The reformed gas pipe and the combustion gas pipe may comprise a first portion between the reformer and the water tank, a heat exchanger inside the water tank and a second portion between the water tank and a downstream end of the gas pipe.

The heat exchanger may be spaced apart from an interior wall of the water tank or may be in contact with an interior wall of the water tank.

The reformed gas pipe and the combustion gas pipe may comprise a first portion between the reformer and the water tank, a heat exchanger outside the water tank and in contact with an exterior wall of the water tank and a second portion between the water tank and a downstream end of the gas pipe. The heat exchanger may have a coiled or serpentine shape. One of the reformed gas pipe and the combustion gas pipe may have a first heat exchanger inside the water tank and the other of the reformed gas pipe and the combustion gas pipe may have a second heat exchanger outside the water tank.

A carbon monoxide reduction unit may be connected to the reformer by the reformed gas pipe. The water tank may be connected between the reformer and the carbon monoxide reduction unit.

The reformer may comprise a reforming unit for generating the reformed gas and a combustion unit for supplying heat energy to the reforming unit, wherein the reformed gas pipe is connected to the reforming unit and the combustion gas pipe is connected to the combustion unit.

A fuel cell system may comprise a fuel cell stack and a reforming apparatus as described above for supplying reformed gas to the fuel cell stack. The system may further comprise a fuel tank for supplying fuel to the reformer. The system may further comprise an oxidizer supply unit for supplying oxidizer to the fuel cell stack.

Embodiments of the invention will now be described by way of example, with reference to the accompanying drawings, in which:
FIG. 1 is a schematic diagram of a fuel cell system;
FIG. 2 is a cross-sectional view of the water tank of the fuel cell system shown in FIG. 1;
FIG. 3 is a schematic diagram of another fuel cell system;
FIG. 4 is a schematic diagram of a fuel cell system according to a first exemplary embodiment of the present invention;
FIG. 5 is a cross-sectional view of the water tank of another fuel cell system;
FIG. 6 is a cross-sectional view of the water tank of another fuel cell system;
FIG. 7 is a cross-sectional view of the water tank of a fuel cell system according to another exemplary embodiment of the present invention;
FIG. 8 is a cross-sectional view of the water tank of a fuel cell system according to a further exemplary embodiment of the present invention; and
FIG. 9 is a cross-sectional view of the water tank of a fuel cell system according to a still further exemplary embodiment of the present invention.

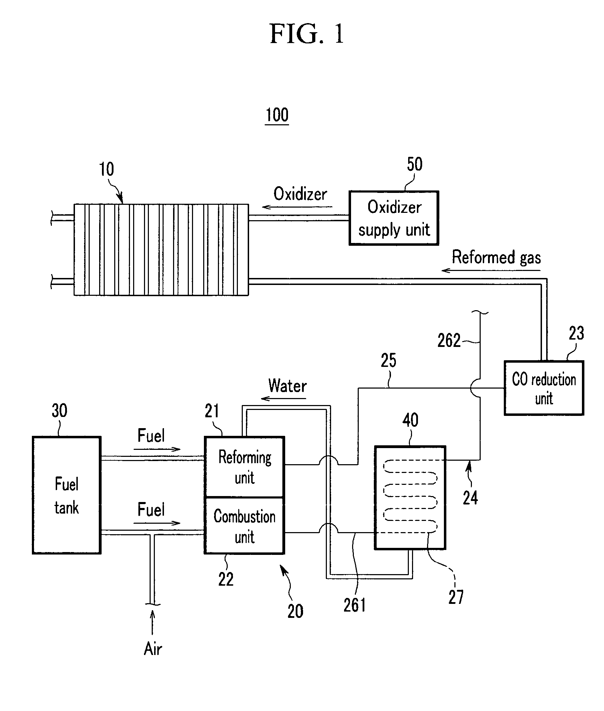

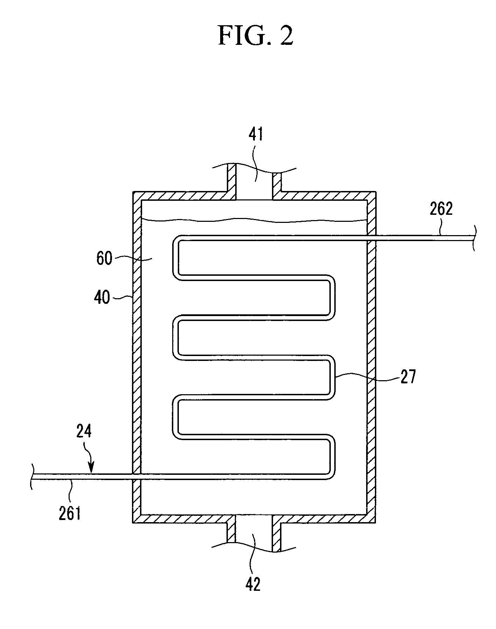

FIG. 1 is a schematic diagram of a fuel cell system, and FIG. 2 is a cross-sectional view of the water tank of the fuel cell system shown in FIG. 1.

Referring to FIGS. 1 and 2, the fuel cell system 100 includes a fuel cell stack 10, a reformer 20, a fuel tank 30, a water tank 40, and an oxidizer supply unit 50. The reformer 20 and the fuel tank 30 and the water tank 40 constitute the fuel supply unit of the fuel cell system 100. The fuel cell system 100 is a Polymer Electrolyte Membrane Fuel Cell (PEMFC) for generating electrical energy using hydrogen-rich reformed gas.

The fuel cell stack 10 generates electrical energy by an electrochemical reaction of external reformed gas and an external oxidizer (air or pure air). The fuel cell stack 10 has a structure in which a plurality of unit cells is stacked. Each of the unit cells includes a Membrane-Electrode Assembly (MEA) and a pair of separators disposed on both sides thereof.

The MEA includes an electrode membrane, the anode disposed on one side of the electrode membrane, and the cathode disposed on the other side of the electrode membrane. The pair of separators includes an anode separator configured to face the anode and to supply the reformed gas to the anode and a cathode separator configured to face the cathode and to supply the oxidizer to the cathode.

The anode functions to separate hydrogen, contained in the fuel, into electrons and protons by an oxidation reaction. The cathode functions to separate oxygen, contained in the oxidizer, into electrons and oxygen ions by a reduction reaction. The electrode membrane has an ion exchange function of moving the protons of the anode to the cathode. The MEA generates electrical energy by the electrochemical reaction of hydrogen and oxygen and generates water as byproducts of the electricity generation reaction.

The oxidizer supply unit 50 supplies the oxidizer to the fuel cell stack 10. The oxidizer can be external air or oxygen stored in an oxygen tank (not shown). The oxidizer supply unit 50 can include an air compressor (not shown) for supplying air, containing oxygen, to the fuel cell stack 10.

The reformer 20 generates hydrogen-rich reformed gas by reforming the hydrocarbon-based fuel and supplies the hydrogen-rich reformed gas to the fuel cell stack 10. The reformer 20 is a steam reformer and configured to generate reformed gas using hydrogen as a chief ingredient by a chemical reaction (i.e., a chemical catalyst reaction by heat energy) of the hydrocarbon-based fuel and steam. In a steam reforming method, a large amount of heat energy has to be supplied externally, but the supply of reformed gas is stable and hydrogen gas of a high concentration can be generated.

The reformer 20 includes a reforming unit 21, a combustion unit (burner) 22, a carbon monoxide (CO) reduction unit 23, a combustion gas pipe 24, and a reformed gas pipe 25.

The reforming unit 21 is connected to the fuel tank 30 and the water tank 40 and configured to receive the hydrocarbon-based fuel and water 60, respectively, from the fuel tank 30 and the water tank 40. The reforming unit 21 generates reformed gas by a chemical catalyst reaction, caused by heat energy, from the hydrocarbon-based fuel and the water 60 supplied thereto.

The combustion unit 22 supplies the heat energy to the reforming unit 21, thereby raising a temperature of the reforming unit 21 to 750°C or more. To this end, the combustion unit 22 is connected to the fuel tank 30 and configured to receive the hydrocarbon-based fuel from the fuel tank 30 and air from an air pump (not shown) and to generate the heat energy by combusting the hydrocarbon-based fuel and the air supplied thereto. The combustion gas pipe 24 is connected to the combustion unit 22 and configured to discharge externally combustion gases generated when the combustion unit 22 is operated.

The chemical catalyst reaction generated in the reforming unit 21 is an endothermic reaction. Accordingly, the combustion unit 22 supplies the heat energy to the reforming unit 21 so that the chemical catalyst reaction can be smoothly performed. As described above, some of the hydrocarbon-based fuel stored in the fuel tank 30 is supplied to the reforming unit 21 and used to generate the reformed gas. The remainder of the hydrocarbon-based fuel is supplied to the combustion unit 22 and used to generate the heat energy for the chemical catalyst reaction of the reforming unit 21.

The fuel tank 30 stores the hydrocarbon-based fuel of a liquid or gas state, such as methanol, ethanol, liquefied natural gas, liquefied petroleum gas, gasoline, or butane gas. The hydrocarbon-based fuel stored in the fuel tank 30 is supplied to the reforming unit 21 and the combustion unit 22 by a fuel pump (not shown). Various kinds of pumps, such as a pneumatic pump, a diaphragm pump, and a motor pump, can be used as the fuel pump.

The water tank 40 stores the water 60 supplied to the reforming unit 21. A water inlet 41 for supplying external water can be formed on the top of the water tank 40. A water outlet 42 for supplying water 60 stored therein to the reforming unit 21 can be formed at the bottom of the water tank 40. The water stored in the water tank 40 is supplied to the reforming unit 21 by a water pump (not shown). Various kinds of pumps, such as a pneumatic pump, a diaphragm pump, and a motor pump, can be used as the water pump.

A primary reformed gas discharged from the reforming unit 21 includes hydrogen gas (i.e., a chief ingredient) and a small amount of carbon monoxide, carbon dioxide, and methane gas. A melt carbonate fuel cell and a solid oxide fuel cell (i.e., fuel cells for high temperature) can use both hydrogen and carbon monoxide as fuel. However, in the polymer electrolyte fuel cell, carbon monoxide poisons a platinum catalyst used as the anode and the cathode of the MEA is poisoned, thus deteriorating the performance of the fuel cell stack 10. Accordingly, the concentration of carbon monoxide in the reformed gas has to be lower than 10 ppm.

The carbon monoxide reduction unit 23 is connected to the reforming unit 21 through the reformed gas pipe 25 and supplied with the primary reformed gas, including carbon monoxide, from the reforming unit 21. The carbon monoxide reduction unit 23 can include a water gas shift converter and a carbon monoxide purifier.

The water gas shift converter lowers the concentration of carbon monoxide to 0.5% to 1% through a water gas shift in which carbon monoxide reacts to steam to further generate hydrogen. The water gas shift can be classified into a high temperature water gas shift in which the concentration of carbon monoxide is lowered to about 4% in temperature conditions of approximately 400°C and a low temperature water gas shift in which the concentration of carbon monoxide is lowered to 0.5% to 1% in temperature conditions of approximately 200°C. The steam left after being used in the reforming unit 21 is supplied to the water gas shift converter, and so steam necessary for the water gas shift can be supplied.

The carbon monoxide purifier can include a selective oxidation reaction unit or a methanation reaction unit. The selective oxidation reaction unit receives a small amount of air and selectively oxidizes and removes only the carbon monoxide. The methanation reaction unit converts carbon monoxide and hydrogen into methane again through a reaction of the carbon monoxide and the hydrogen. The carbon monoxide reduction unit reduces carbon monoxide, included in the primary reformed gas, to 10 ppm or less and supplies a secondary reformed gas having reduced carbon monoxide to the fuel cell stack 10.

The temperature of the combustion gas pipe 24 can be approximately 80°C to 90°C. In the fuel cell system 100, the water tank 40 prevents the freezing of water 60 by raising internal temperature using the heat of the combustion gas pipe 24. To this end, the combustion gas pipe 24 is configured to pass through the inside of the water tank 40. That is, the combustion gas pipe 24 includes a first exhaust unit 261 disposed between the combustion unit 22 and the water tank 40, a heat exchange unit 27 disposed within the water tank 40, and a second exhaust unit 262 disposed outside of the water tank 40.

Part of or the entire heat exchange unit 27 can be bent. The heat exchange unit 27 can be spaced apart from the interior wall of the water tank 40 with a predetermined distance therebetween except portions in which the heat exchange unit 27 penetrates the water tank 40. Since part of or the entire heat exchange unit 27 is bent, the length of the heat exchange unit 27, bringing into contact with water 60, can be expanded. Accordingly, the freezing of water 60 can be effectively prevented.

The heat exchange unit 27 can be bent in zigzags, in other words in a serpentine shape, or wound like a coil. In FIG. 2, an example in which the heat exchange unit 27 is bent in zigzags is illustrated. The shape of the heat exchange unit 27 is not limited to the example shown in FIG. 2, but can be modified in various ways.

As described above, the fuel cell system 100 prevents the freezing of the water tank 40 using heat generated therein. Accordingly, the fuel cell system 100 can be stably operated even at a sub-zero temperature. Further, since additional hot wires need not to be installed in the water tank 40, additional power for driving the hot wires is not required. Accordingly, generating efficiency of the fuel cell system 100 can be increased.

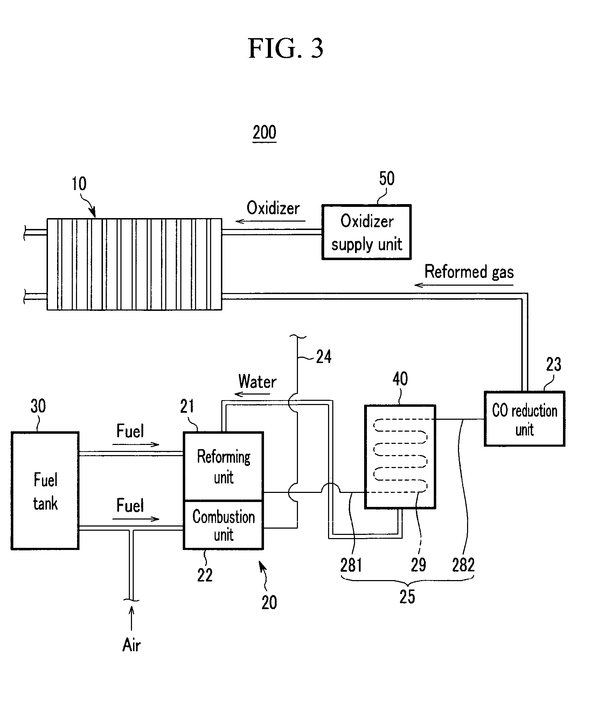

FIG. 3 is a schematic diagram of another fuel cell system.

Referring to FIG. 3, the fuel cell system 200 is configured to raise an internal temperature of a water tank 40 using the heat of a reformed gas pipe 25 instead of the combustion gas pipe 24 according to Figure 1. The fuel cell system 200 has the same construction as the fuel cell system of Figure 1 except the structures of the combustion gas pipe 24 and the reformed gas pipe 25. The same elements as in Figure 1 are assigned the same reference numerals.

The reformed gas pipe 25, connecting a reforming unit 21 and a carbon monoxide reduction unit 23, has a temperature of approximately 80°C to 90°C. The water tank 40 is disposed between the reforming unit 21 and the carbon monoxide reduction unit 23. The reformed gas pipe 25 is configured to pass through the inside of the water tank 40. That is, the reformed gas pipe 25 includes a first conveyer 281 disposed between the reforming unit 21 and the water tank 40, a heat exchange unit 29 disposed within the water tank 40, and a second conveyer 282 disposed between the water tank 40 and the carbon monoxide reduction unit 23.

Part of or the entire heat exchange unit 29 can be bent. The heat exchange unit 29 can be spaced apart from the interior wall of the water tank 40 with a predetermined distance therebetween except portions in which the heat exchange unit 29 penetrates the water tank 40. Since part of or the entire heat exchange unit 29 is bent, the length of the heat exchange unit 29 bringing into contact with water 60 can be expanded, and so the freezing of water 60 can be effectively prevented.

The heat exchange unit 29 can be bent in zigzags or wound like a coil. In FIG. 3, an example in which the heat exchange unit 29 is bent in zigzags is illustrated. The shape of the heat exchange unit 29 is not limited to the example shown in FIG. 3 and can be modified in various ways.

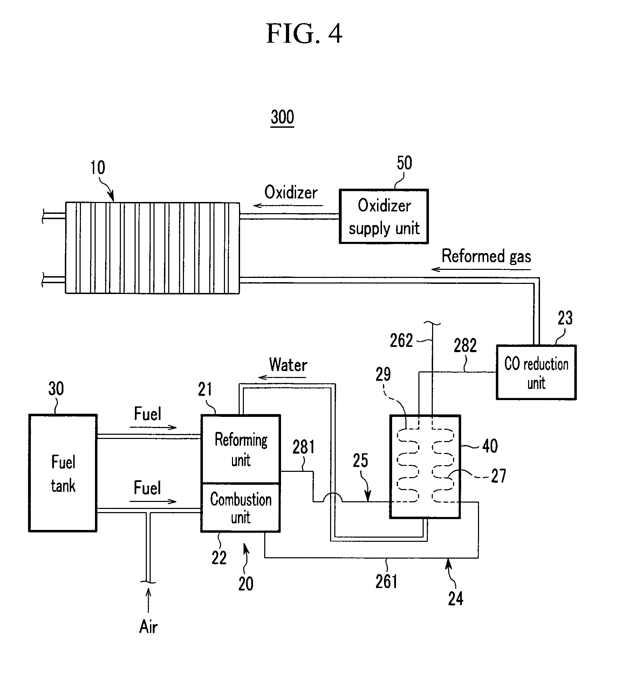

FIG. 4 is a schematic diagram of a fuel cell system according to a first exemplary embodiment of the present invention.

Referring to FIG. 4, the fuel cell system 300 according to this exemplary embodiment is configured to raise an internal temperature of a water tank 40 using both the heat of a combustion gas pipe 24 and a reformed gas pipe 25. The fuel cell system 300 of this exemplary embodiment has the same construction as the fuel cell system 100 of Figure 1 except the structures of the combustion gas pipe 24 and the reformed gas pipe 25. The same elements as in Figure 1 are assigned the same reference numerals.

The water tank 40 is disposed between a reforming unit 21 and a carbon monoxide reduction unit 23. The combustion gas pipe 24 and the reformed gas pipe 25 are configured to pass through the inside of the water tank 40. That is, the combustion gas pipe 24 includes a first exhaust unit 261 disposed between a combustion unit 22 and the water tank 40, a heat exchange unit 27 disposed within the water tank 40, and a second exhaust unit 262 disposed outside of the water tank 40. The reformed gas pipe 25 includes a first conveyer 281 disposed between the reforming unit 21 and the water tank 40, a heat exchange unit 29 disposed within the water tank 40, and a second conveyer 282 disposed between the water tank 40 and the carbon monoxide reduction unit 23.

Each of the two heat exchange units 27 and 29 can be bent partly or generally. Each of the heat exchange units 27 and 29 can be spaced apart from the interior wall of the water tank 40 with a predetermined distance therebetween except portions in which it penetrates the water tank 40. Since each of the heat exchange units 27 and 29 is bent partly or generally, the length of each of the heat exchange units 27 and 29, brought into contact with water 60, can be expanded. Accordingly, the freezing of water 60 can be effectively prevented. The two heat exchange units 27 and 29 can adjoin each other or can be spaced apart from each other. In FIG. 4, an example in which the two heat exchange units 27 and 29 are spaced apart from each other is illustrated.

Each of the heat exchange units 27 and 29 can be bent in zigzags or wound like coil. In FIG. 4, an example in which each of the heat exchange units 27 and 29 is bent in zigzags is illustrated. The shape of the heat exchange units 27 and 29 is not limited to the example shown in FIG. 4 and can be modified in various ways.

In the fuel cell system 300 of this exemplary embodiment, a temperature of the water tank 40 is raised using both the heat of the combustion gas pipe 24 and the reformed gas pipe 25. Accordingly, the freezing of the water tank 40 can be more effectively prevented because heat use efficiency can be increased as compared with the systems of Figures 1 and 3. Each of the fuel cell systems 100, 200, and 300 does not require an additional device for preventing the freezing of the water tank 40 because it can prevent the freezing of the water tank 40 by changing only the structure of the combustion gas pipe 24 or the structure of the reformed gas pipe 25 or both.

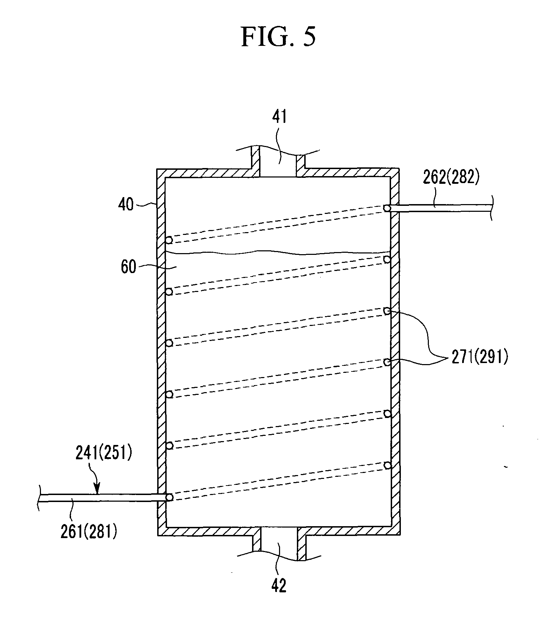

FIG. 5 is a cross-sectional view of the water tank of another fuel cell system.

Referring to FIG. 5, the fuel cell system has the same construction as the fuel cell system according to the fuel cell system 100 or 200 except that the heat exchange unit 271 of a combustion gas pipe 241 or the heat exchange unit 291 of a reformed gas pipe 251 is brought into contact with the interior wall of a water tank 40. The same elements as the fuel cell systems 100, 200 are assigned the same reference numerals.

The heat exchange unit 271 or 291 can be disposed in a shape in which it is wound like coil along the interior wall of the water tank 40. Here, the number of times that the heat exchange unit 271 or 291 is wound is controlled. In this case, the length of the heat exchange unit 271 or 291 bringing into contact with the water tank 40 can be easily controlled. The heat exchange units 271 and 291 bring into contact with both the interior wall of the water tank 40 and water 60 stored in the water tank 40.

Accordingly, both the heat of a combustion gas or a reformed gas flowing within the heat exchange units 271 and 291 is simultaneously transferred to the water tank 40 and the water 60 stored in the water tank 40.

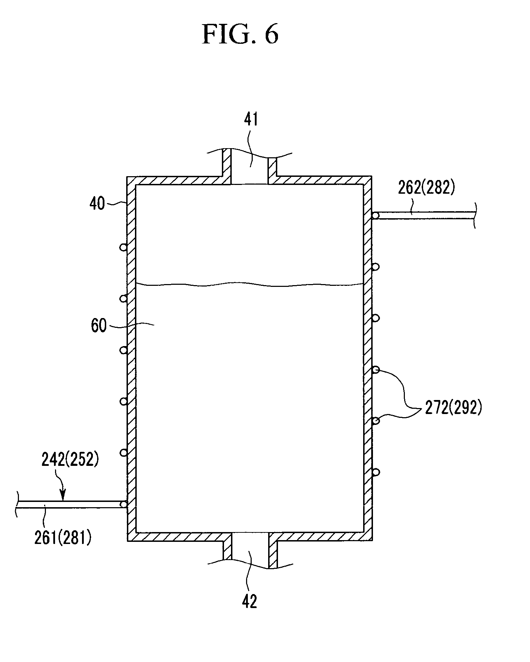

FIG. 6 is a cross-sectional view of the water tank of another fuel cell system.

Referring to FIG. 6, the fuel cell system has the same construction as the fuel cell system 100 or 200 except that the heat exchange unit 272 of a combustion gas pipe 242 or the heat exchange unit 292 of a reformed gas pipe 252 is brought into contact with the exterior wall of a water tank 40. The same elements as the fuel cell system 100, 200 are assigned the same reference numerals.

Each of the heat exchange units 272 and 292 can be disposed in a shape in which it is wound like a coil along the exterior wall of the water tank 40. Here, the number of times that each of the heat exchange units 272 and 292 is wound is controlled. In this case, the length of the heat exchange unit, bringing into contact with the water tank 40, can be easily controlled. Since the heat exchange units 272 and 292 bring into contact with the exterior wall of the water tank 40, the heat of a combustion gas or a reformed gas flowing within the heat exchange units 272 and 292 is transferred to the water tank 40. Accordingly, the heat raises a temperature of the water tank 40 and then raises a temperature of the water 60 stored in the water tank 40.

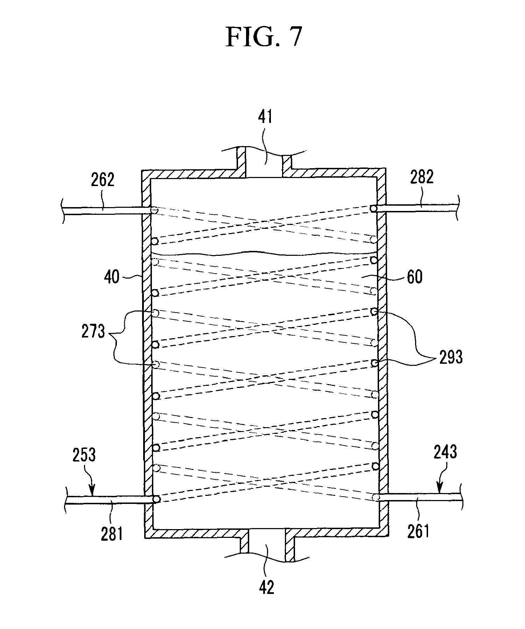

FIG. 7 is a cross-sectional view of the water tank of a fuel cell system according to a further exemplary embodiment of the present invention.

Referring to FIG. 7, the fuel cell system according to this exemplary embodiment has the same construction as the fuel cell system according to the first exemplary embodiment except that the heat exchange unit 273 of a combustion gas pipe 243 and the heat exchange unit 293 of a reformed gas pipe 253 are brought into contact with the interior wall of a water tank 40. The same elements as the fuel cell system of the first exemplary embodiment are assigned the same reference numerals.

The two heat exchange units 273 and 293 can be wound like a coil along the interior wall of the water tank 40 with a predetermined distance therebetween. The heat exchange units 273 and 293 bring into contact with both the interior wall of the water tank 40 and water 60 stored in the water tank 40. Accordingly, heat of a combustion gas and a reformed gas flowing within the heat exchange units 273 and 293 is simultaneously transferred to the water tank 40 and the water 60 stored in the water tank 40.

Although the inside of the combustion gas pipe 243 is shaded in FIG. 7, for convenience of description, in order to distinguish the heat exchange units 273 and 293 from each other, the inside of the combustion gas pipe 243 is not clogged, and a passage for discharging the combustion gas is formed within the combustion gas pipe 243.

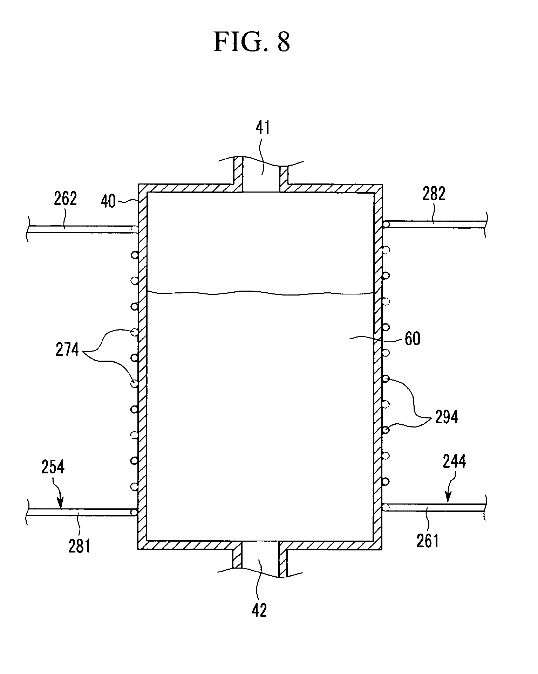

FIG. 8 is a cross-sectional view of the water tank of a fuel cell system according to another exemplary embodiment of the present invention.

Referring to FIG. 8, the fuel cell system according to this exemplary embodiment has the same construction as the fuel cell system of the first exemplary embodiment except that the heat exchange unit 274 of a combustion gas pipe 244 and the heat exchange unit 294 of a reformed gas pipe 254 are brought into contact with the exterior wall of a water tank 40. The same elements as the fuel cell system of the first exemplary embodiment are assigned the same reference numerals.

The two heat exchange units 274 and 294 can be wound like coil along the exterior wall of the water tank 40 with a predetermined distance therebetween. Since the heat exchange units 274 and 294 are brought into contact with the exterior wall of the water tank 40, heat of a combustion gas and a reformed gas flowing within the heat exchange units 274 and 294 is transferred to the water tank 40. Accordingly, the heat raises a temperature of the water tank 40 and then raises a temperature of water 60 stored in the water tank 40.

Although the inside of the combustion gas pipe 244 is shaded in FIG. 8, for convenience of description, in order to distinguish the heat exchange unit 274 and 294 from each other, the inside of the combustion gas pipe 244 is not clogged, and a passage for discharging the combustion gas is formed within the combustion gas pipe 244.

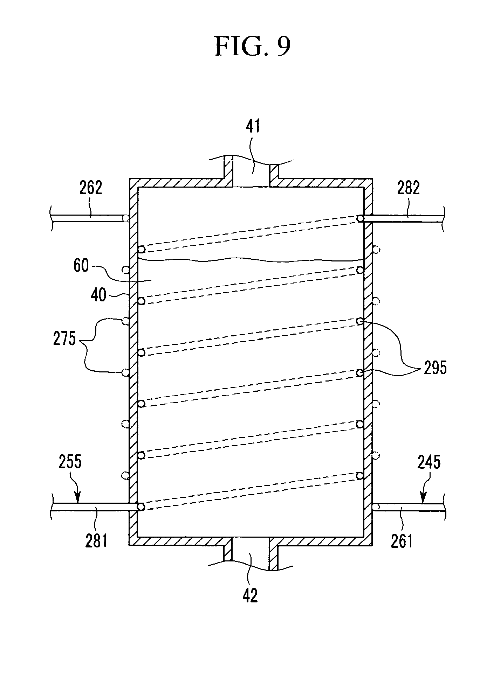

FIG. 9 is a cross-sectional view of the water tank of a fuel cell system according to yet another exemplary embodiment of the present invention.

Referring to FIG. 9, the fuel cell system of this exemplary embodiment has the same construction as the fuel cell system of the first exemplary embodiment except that one of the heat exchange unit 275 of a combustion gas pipe 245 and the heat exchange unit 295 of a reformed gas pipe 255 is brought into contact with the interior wall of a water tank 40 and the other thereof is brought into contact with the exterior wall of the water tank 40. The same elements as the fuel cell system of the first exemplary embodiment are assigned the same reference numerals.

In FIG. 9, an example in which the heat exchange unit 275 of the combustion gas pipe 245 is brought into contact with the exterior wall of the water tank 40 and the heat exchange unit 295 of the reformed gas pipe 255 is brought into contact with the interior wall of the water tank 40 is illustrated. The two heat exchange units 275 and 295 can be wound like a coil along the exterior and interior walls of the water tank 40.

While this invention has been described in connection with what is presently considered to be practical some exemplary embodiments, it is to be understood that the invention is not limited to the disclosed embodiments, but, on the contrary, is intended to cover various modifications and equivalent arrangements included within the scope of the appended claims.

## Claims

1. A reforming apparatus for a fuel cell system, comprising:
a reformer (20); and
a water tank (40) for supplying water to the reformer;
further comprising:
a reformed gas pipe (25) extending from the reformer for discharging reformed gas; and
a combustion gas pipe (24) extending from the reformer for discharging combustion gas;
wherein the reformed gas pipe (25) and the combustion gas pipe (24) are in direct thermal contact with water in the water tank.

2. The reforming apparatus of claim 1, wherein the reformed gas pipe and the combustion gas pipe comprise:
a first portion (261, 281) between the reformer and the water tank;
a heat exchanger (27, 29, 271, 273, 291, 293, 295) inside the water tank; and
a second portion (262, 282) between the water tank and a downstream end of the gas pipe.

3. The reforming apparatus of claim 2, wherein the heat exchanger is spaced apart from an interior wall of the water tank.

4. The reforming apparatus of claim 2, wherein the heat exchanger is in contact with an interior wall of the water tank.

5. The reforming apparatus of claim 1, wherein the reformed gas pipe and the combustion gas pipe comprises:
a first portion (261, 281) between the reformer and the water tank;
a heat exchanger (272, 274, 275, 292, 294) outside the water tank and in contact with an exterior wall of the water tank; and
a second portion (262, 282) between the water tank and a downstream end of the gas pipe.

6. The reforming apparatus of any one of claims 2 to 5, wherein the heat exchanger has a coiled or serpentine shape.

7. The reforming apparatus of any one of claims 2 to 6, wherein one of the reformed gas pipe and the combustion gas pipe has a first heat exchanger inside the water tank and the other of the reformed gas pipe and the combustion gas pipe has a second heat exchanger outside the water tank.

8. The reforming apparatus of any one of the preceding claims, further comprising a carbon monoxide reduction unit (23) connected to the reformer by the reformed gas pipe.

9. The reforming apparatus of claim 8, wherein the water tank is connected between the reformer and the carbon monoxide reduction unit (23).

10. The reforming apparatus of any one of the preceding claims, wherein the reformer (20) comprises:
a reforming unit (21) for generating the reformed gas; and
a combustion unit (22) for supplying heat energy to the reforming unit,
wherein the reformed gas pipe is connected to the reforming unit and the combustion gas pipe is connected to the combustion unit.

11. A fuel cell system comprising:
a fuel cell stack (10); and
a reforming apparatus according to any one of the preceding claims for supplying reformed gas to the fuel cell stack.

12. The system of claim 11, further comprising a fuel tank (30) for supplying fuel to the reformer.

13. The system of claim 11 or 12, further comprising an oxidizer supply unit (50) for supplying oxidizer to the fuel cell stack.

## Patentansprüche

1. Reformierungsvorrichtung für ein Brennstoffzellensystem, aufweisend:
einen Reformer (20); und
einen Wassertank (40) zur Versorgung des Reformers mit Wasser;
weiterhin aufweisend:
ein Rohr (25) für reformiertes Gas, das sich vom Reformer erstreckt, zur Abgabe von reformiertem Gas; und
ein Rohr (24) für Brenngas, das sich vom Reformer erstreckt, zur Abgabe von Brenngas;
wobei das Rohr (25) für reformiertes Gas und das Rohr (24) für Brenngas in direktem thermischen Kontakt mit Wasser im Wassertank stehen.

2. Reformierungsvorrichtung nach Anspruch 1, wobei das Rohr für reformiertes Gas und das Rohr für Brenngas aufweisen:
einen ersten Abschnitt (261, 281) zwischen dem Reformer und dem Wassertank;
einen Wärmetauscher (27, 29, 271, 273, 291, 293, 295) im Wassertank; und
einen zweiten Abschnitt (262, 282) zwischen dem Wassertank und einem stromabwärts gelegenen Ende des Gasrohrs.

3. Reformierungsvorrichtung nach Anspruch 2, wobei der Wärmetauscher von einer Innenwand des Wassertanks beabstandet ist.

4. Reformierungsvorrichtung nach Anspruch 2, wobei der Wärmetauscher mit einer Innenwand des Wassertanks in Kontakt steht.

5. Reformierungsvorrichtung nach Anspruch 1, wobei das Rohr für reformiertes Gas und das Rohr für Brenngas aufweisen:
einen ersten Abschnitt (261, 281) zwischen dem Reformer und dem Wassertank;
einen Wärmetauscher (272, 274, 275, 292, 294) außerhalb des Wassertanks, der mit einer Außenwand des Wassertanks in Kontakt steht; und
einen zweiten Abschnitt (262, 282) zwischen dem Wassertank und einem stromabwärts gelegenen Ende des Gasrohrs.

6. Reformierungsvorrichtung nach einem der Ansprüche 2 bis 5, wobei der Wärmetauscher eine Spulen- oder Serpentinenform aufweist.

7. Reformierungsvorrichtung nach einem der Ansprüche 2 bis 6, wobei eines des Rohrs für reformiertes Gas und des Rohrs für Brenngas einen ersten Wärmetauscher im Wassertank aufweist und wobei das andere des Rohrs für reformiertes Gas und des Rohrs für Brenngas einen zweiten Wärmetauscher außerhalb des Wassertanks aufweist.

8. Reformierungsvorrichtung nach einem der vorhergehenden Ansprüche, weiterhin aufweisend eine Einheit (23) zur Reduktion von Kohlenstoffmonoxid, die über das Rohr für reformiertes Gas mit dem Reformer verbunden ist.

9. Reformierungsvorrichtung nach Anspruch 8, wobei der Wassertank zwischen den Reformer und die Einheit (23) zur Reduktion von Kohlenstoffmonoxid geschaltet ist.

10. Reformierungsvorrichtung nach einem der vorhergehenden Ansprüche, wobei der Reformer (20) aufweist:
eine Reformierungseinheit (21) zum Erzeugen des reformierten Gases; und
eine Verbrennungseinheit (22) zur Versorgung der Reformierungseinheit mit Wärmeenergie, wobei das Rohr für reformiertes Gas mit der Reformierungseinheit verbunden ist und das Rohr für Brenngas mit der Verbrennungseinheit verbunden ist.

11. Brennstoffzellensystem, aufweisend:
einen Brennstoffzellenstapel (10); und
eine Reformierungsvorrichtung nach einem der vorhergehenden Ansprüche zur Versorgung des Brennstoffzellenstapels mit reformiertem Gas.

12. System nach Anspruch 11, weiterhin aufweisend einen Brennstofftank (30) zur Versorgung des Reformers mit Brennstoff.

13. System nach Anspruch 11 oder 12, weiterhin aufweisend eine Oxidationsmittelzufuhreinheit (50) zur Versorgung des Brennstoffzellenstapels mit Oxidationsmittel.

## Revendications

1. Appareil de reformage pour un système de pile à combustible, comprenant :
un reformeur (20) ; et
un réservoir d'eau (40) pour fournir de l'eau au reformeur ;
comprenant en outre :
un tuyau de gaz reformé (25) s'étendant du reformeur pour décharger le gaz reformé ; et
un tuyau de gaz de combustion (24) s'étendant du reformeur pour décharger le gaz de combustion ;
dans lequel le tuyau de gaz reformé (25) et le tuyau de gaz de combustion (24) sont en contact thermique direct avec l'eau dans le réservoir d'eau.

2. Appareil de reformage selon la revendication 1, dans lequel le tuyau de gaz reformé et le tuyau de gaz de combustion comprennent :
une première partie (261, 281) entre le reformeur et le réservoir d'eau ;
un échangeur de chaleur (27, 29, 271, 273, 291, 293, 295) à l'intérieur du réservoir d'eau ; et
une deuxième partie (262, 282) entre le réservoir d'eau et une extrémité aval du tuyau de gaz.

3. Appareil de reformage selon la revendication 2, dans lequel l'échangeur de chaleur est espacé d'une paroi intérieure du réservoir d'eau.

4. Appareil de reformage selon la revendication 2, dans lequel l'échangeur de chaleur est en contact avec une paroi intérieure du réservoir d'eau.

5. Appareil de reformage selon la revendication 1, dans lequel le tuyau de gaz reformé et le tuyau de gaz de combustion comprennent :
une première partie (261, 281) entre le reformeur et le réservoir d'eau ;
un échangeur de chaleur (272, 274, 275, 292, 294) à l'extérieur du réservoir d'eau et en contact avec une paroi extérieure du réservoir d'eau ; et
une deuxième partie (262, 282) entre le réservoir d'eau et une extrémité aval du tuyau de gaz.

6. Appareil de reformage selon l'une quelconque des revendications 2 à 5, dans lequel l'échangeur de chaleur a une forme enroulée ou de serpentin.

7. Appareil de reformage selon l'une quelconque des revendications 2 à 6, dans lequel l'un du tuyau de gaz reformé et du tuyau de gaz de combustion comporte un premier échangeur de chaleur à l'intérieur du réservoir d'eau et l'autre du tuyau de gaz reformé et du tuyau de gaz de combustion comporte un deuxième échangeur de chaleur à l'extérieur du réservoir d'eau.

8. Appareil de reformage selon l'une quelconque des revendications précédentes, comprenant en outre une unité de réduction de monoxyde de carbone (23) reliée au reformeur par le tuyau de gaz reformé.

9. Appareil de reformage selon la revendication 8, dans lequel le réservoir d'eau est relié entre le reformeur et l'unité de réduction de monoxyde de carbone (23).

10. Appareil de reformage selon l'une quelconque des revendications précédentes, dans lequel le reformeur (20) comprend :
une unité de reformage (21) pour générer le gaz reformé ; et
une unité de combustion (22) pour fournir une énergie thermique à l'unité de reformage, le tuyau de gaz reformé étant relié à l'unité de reformage et le tuyau de gaz de combustion étant relié à l'unité de combustion.

11. Système de pile à combustible comprenant :
un empilage de piles à combustible (10) ; et
un appareil de reformage selon l'une quelconque des revendications précédentes, pour fournir le gaz reformé à l'empilage de piles à combustible.

12. Système selon la revendication 11, comprenant en outre un réservoir de combustible (30) pour fournir un combustible au reformeur.

13. Système selon la revendication 11 ou 12, comprenant en outre une unité d'alimentation en comburant (50) pour fournir un comburant à l'empilage de piles à combustible.
